# EUROPÄISCHE PATENTSCHRIFT

(11) **EP 3 805 906 B1**
(45) Veröffentlichungstag und Bekanntmachung des Hinweises auf die Patenterteilung: **19.02.2025**
(21) Anmeldenummer: 20198047.1
(22) Anmeldetag: 24.09.2020
(51) Int. Cl.: G06F 3/041, G06F 3/044

(54) **BEDIENEINHEIT FÜR EIN FAHRZEUG UND FAHRZEUG**
VEHICLE AND CONTROL UNIT FOR A VEHICLE
UNITÉ DE COMMANDE POUR UN VÉHICULE ET VÉHICULE

(30) Priorität: 11.10.2019 DE 102019215697
(43) Veröffentlichungstag der Anmeldung: 14.04.2021
(73) Patentinhaber: Continental Automotive Technologies GmbH, 30175 Hannover (DE)
(72) Erfinder: Brüninghaus, Andreas, 65824 Schwalbach a. Ts. (DE); Beilker, Dirk, 65824 Schwalbach a. Ts. (DE)
(74) Vertreter: Continental Corporation

(56) Entgegenhaltungen:
- EP-A1- 2 416 231
- EP-A1- 3 418 854
- DE-A1- 102010 040 164
- DE-T5- 112017 001 809
- US-A1- 2014 159 569
- US-A1- 2016 041 679
- FREWIN CHRISTOPHER L. ET AL: "Electrical Properties of Thiol-ene-based Shape Memory Polymers Intended for Flexible Electronics", POLYMERS, vol. 11, no. 5, 17 May 2019 (2019-05-17), CH, pages 902, XP055773564, ISSN: 2073-4360, DOI: 10.3390/polym11050902

## Beschreibung

Die Erfindung betrifft eine Bedieneinheit für ein Fahrzeug. Ferner betrifft die Erfindung ein Fahrzeug mit einer solchen Bedieneinheit.

Die Krafterkennung bei heutigen Touchscreens wird für gewöhnlich durch durchsichtige klare Sensoren oder separate Komponenten bewerkstelligt. Die separaten Komponenten bedeuten jedoch hohe Zusatzkosten sowie zusätzlichen Bauraum für die Erzeugung einer Hubbewegung.

Die EP 2635957 B1 offenbart ein System umfassend einem Touchscreenbildschirm und ein Gehäuse. Der Touchscreenbildschirm ist auf dem Gehäuse angeordnet und weist eine LCD-Anzeige auf. Ferner weist das System Kraftsensoren auf, welche um die LCD-Anzeige zwischen dem Gehäuse und den Touchscreenbildschirm herum angeordnet sind. Die Kraftsensoren sind an dem Gehäuse und der LCD-Anzeige angeordnet. Die Kraftsensoren sind mit dem Gehäuse und der LCD-Anzeige verklebt.

Die EP 2465019 B1 offenbart einen gedruckten Kraftsensor in einem Berührungsbildschirm. Hier ist der Kraftsensor in einem mehrschichtigen Touchscreen integriert und mit optisch klarem Klebstoff eingeklebt.

Die DE 10 2010 040164 A1 betrifft kapazitive Bedienungstafeln. Im Besonderen bezieht sich die DE 10 2010 040164 A1 auf kapazitive Bedienungstafeln, die berührungsempfindliche und kraftempfindliche Eingabevorrichtungen enthalten. Die EP 2 416 231 A1 beschreibt eine eine Informationseingabevorrichtung, die so konfiguriert ist, dass sie die Eingabe von Informationen als Reaktion auf eine Druckbetätigung eines Benutzers auf ein Bedienfeldelement und entsprechend der Druckkraft ermöglicht. Die EP 2 416 231 A1 betrifft außerdem eine Druckerkennungseinheit zur Verwendung in der Informationseingabevorrichtung.

Es ist eine Aufgabe der Erfindung, eine verbesserte Bedieneinheit, wie beispielsweise ein Touchdisplay, anzugeben.

Diese Aufgabe wird durch eine Bedieneinheit mit den Merkmalen des Anspruchs 1, eine Bedieneinheit mit den Merkmalen des Anspruchs 2, eine Bedieneinheit mit den Merkmalen des Anspruchs 3, und ein Fahrzeug mit den Merkmalen des Anspruchs 12 gelöst.

In den Unteransprüchen sind weitere vorteilhafte Maßnahmen aufgelistet, die beliebig geeignet miteinander kombiniert werden können, um weitere Vorteile zu erzielen.

Eine Bedieneinheit für ein Fahrzeug umfasst:
ein Aufnahmegehäuse zur Aufnahme eines Displaymoduls, wobei das Aufnahmegehäuse einen Aufnahmerand aufweist,
eine Frontabdeckung mit zumindest einem transparenten berührungsempfindlichen Bedienfeld zur Bedienung des Displaymoduls,
mindestens einem der Frontabdeckung zugeordneten Kraftsensor zum Messen einer auf das Bedienfeld der Frontabdeckung ausgeübten Kraft, wobei der Aufnahmerand Aussparungen aufweist, wobei jeweils zumindest ein Kraftsensor in den Aussparungen angeordnet ist, wobei die Frontabdeckung umfangsseitig zumindest teilweise mit dem Aufnahmerand verbunden ist, wobei das Aufnahmegehäuse eine Rückwand und ein Paar von gegenüber angeordneten Seitenwänden umfasst, und wobei die Seitenwände an der Rückwand zur Aufnahme des Displaymoduls angeordnet sind und der Aufnahmerand das Ende der Seitenwände ist.

Eine solche Bedieneinheit kann beispielsweise das Fahrzeugdisplay sein. Ein Displaymodul ist diejenige Komponente, welche die Informationen erzeugt und anzeigt. Ein solches Displaymodul ist beispielsweise mit einer Steuerschaltung, über die das Displaymodul zu steuern ist, mittels Kabel oder einer Leiterbahn verbunden.

Das Bedienfeld kann vorzugsweise als Touchscreen und beweglich d. h. verformbar ausgebildet sein. Die Frontabdeckung kann auch vollständig als Bedienfeld, beispielsweise als Touchscreen und beweglich ausgestaltet sein, d. h., dass die Frontabdeckung sich bei Ausübung eines Drucks durch den Benutzer bewegt bzw. verformt.

Ein Kraftsensor ist ein Sensor zum Messen der vom Benutzer ausgeübten Kraft, beispielsweise ein Widerstandssensor.

Durch die Integration des Kraftsensors in der Aussparung kann der Druck oder Weg zwischen der starren Komponente der Bedieneinheit, hier dem Aufnahmegehäuse und der beweglichen bzw. verformbaren Frontabdeckung einfach gemessen werden.

Zusätzliche Komponenten entfallen. Ferner können die Kraftsensoren vollständig in der Aussparung integriert werden, beispielsweise wenn diese eine längliche Form aufweisen. Dadurch kann auf eine durchsichtige bzw. klare Ausgestaltung der Kraftsensoren verzichtet werden. Die Bedieneinheit kann beispielsweise als Touchscreen in einem Fahrzeug verwendet werden. Durch die Erfindung ist somit eine kosten- und bauraumoptimierte Integration von zumindest einem Kraftsensor in einer Bedieneinheit möglich.

Vorzugsweise werden mindestens drei Kraftsensoren in korrespondierenden Aussparungen im Aufnahmerand angeordnet. Diese können gleichermaßen verteilt werden. Dadurch kann eine gute Auflösung erzielt werden.

Gemäß einem ersten Aspekt der vorliegenden Erfindung ist zwischen der Frontabdeckung und dem Aufnahmerand als auch zwischen dem zumindest einem Kraftsensor und dem Aufnahmerand zur Verbindung des Aufnahmegehäuses und des Kraftsensors mit der Frontabdeckung ein verformbarer adhäsiver Werkstoff mit elastischer Eigenschaft angeordnet, so dass bei Ausübung einer Kraft auf zumindest das Bedienfeld die Kraft durch Verformung des verformbaren adhäsiven Werkstoffs auf den Kraftsensor weitergeleitet wird. Bei Nachlassen der Kraftausübung auf das Bedienfeld bildet der Werkstoff seine Verformung zurück, wodurch keine Kraft auf den Kraftsensor mehr ausgeübt wird. Der elastische verbindende Werkstoff weist eine dauerhafte Verformbarkeit auf, so dass die Bedienkraft des Benutzers durch den verformbaren Werkstoff auf den Kraftsensor übertragen wird. Durch die Krafteinwirkung des Benutzers auf das Bedienfeld wird dieses somit verformt.

Diese Verformung wird durch die Kraftsensoren in den Aussparungen erkannt. Durch die elastische Verbindung vorzugsweise einer Verklebung ist zudem eine einfache Verbindung von dem Aufnahmegehäuse mit der Frontabdeckung möglich.

Gemäß einem zweiten Aspekt der vorliegenden Erfindung ist zwischen der Frontabdeckung und dem Aufnahmerand als auch zwischen dem zumindest einem Kraftsensor und der Frontabdeckung zur Verbindung des Aufnahmegehäuses und des Kraftsensors mit der Frontabdeckung ein verformbarer adhäsiver Werkstoff mit elastischer Eigenschaft angeordnet, so dass bei Ausübung einer Kraft auf zumindest das Bedienfeld die Kraft durch Verformung des verformbaren adhäsiven Werkstoffs auf den Kraftsensor weitergeleitet wird. Bei Nachlassen der Kraftausübung auf das Bedienfeld bildet der Werkstoff seine Verformung zurück, wodurch keine Kraft auf den Kraftsensor mehr ausgeübt wird.

Gemäß einem dritten Aspekt der vorliegenden Erfindung ist zwischen der Frontabdeckung und dem Aufnahmerand zur Verbindung des Aufnahmegehäuses mit der Frontabdeckung ein verformbarer adhäsiver Werkstoff mit elastischer Eigenschaft angeordnet, wobei der Kraftsensor als kapazitiver Drucksensor ausgebildet ist. Dabei umfasst der kapazitive Drucksensor zwei Elektroden. Der verformbare adhäsive Werkstoff mit elastischer Eigenschaft ist zwischen den zwei Elektroden angeordnet. Der elastische Werkstoff dient somit als Dielektrikum zwischen den Elektroden. Das bedeutet, dass der elastische Werkstoff als Teil des Kraftsensors verwendet wird.

Ein kapazitiver Drucksensor arbeitet auf Basis der Veränderung der elektrischen Kapazität eines einzelnen Kondensators oder eines Kondensatorsystems. Bei Ausübung einer Kraft auf zumindest das Bedienfeld wird die Kraft durch Verformung des verformbaren adhäsiven Werkstoffs auf den kapazitiven Sensor weitergeleitet.

Bei Nachlassen der Kraftausübung auf das Bedienfeld bildet der verformbare adhäsive Werkstoff seine Verformung zurück, wodurch keine Kraft auf den kapazitiven Sensor mehr ausgeübt wird.

In weiterer bevorzugter Ausgestaltung ist der verformbare adhäsive Werkstoff mit elastischer Eigenschaft als verformbare adhäsive Werkstoffschicht ausgebildet. Die Werkstoffschicht ist im Bereich des Kraftsensors dünner als in den Bereichen ohne Kraftsensor ausgebildet. Diese lokale Ausdünnung des Werkstoffs an der Kraftsensorposition bewirkt eine Erhöhung der Auflösung des Kraftsensors.

In vorzugsweiser Ausgestaltung ist der verformbare adhäsive Werkstoff als ein verformbarer Klebstoff ausgebildet. Der Klebstoff weist dabei eine elastische Eigenschaft auf, sodass nach dem Ausüben einer Kraft auf das Bedienfeld durch den Benutzer sich der Klebstoff wieder in seine Ursprungsform zurückbildet, so dass keine Kraft mehr auf den Kraftsensor ausgeübt wird. Alternativ oder zusätzlich bei mehreren Kraftsensoren ist der verformbare adhäsive Werkstoff als eine adhäsive Formgedächtnislegierung ausgebildet. Diese weist ebenfalls eine elastische Eigenschaft auf und bildet sich nach der Krafteinwirkung des Benutzers auf das Bedienfeld wieder zurück, sodass keine Kraft mehr auf den Kraftsensor ausgeübt wird.

In weiterer bevorzugter Ausgestaltung weist der verformbare adhäsive Werkstoff eine geringere Steifigkeit als das Bedienfeld bzw. die Frontabdeckung auf.

Vorzugsweise ist die Frontabdeckung als ein Touchscreen ausgebildet. Dabei ist der Touchscreen berührungsempfindlich und verformbar ausgestaltet.

Weiterhin vorzugsweise ist der zumindest eine Kraftsensor vollständig in der Aussparung angeordnet. Dadurch muss der Kraftsensor nicht mehr durchsichtig bzw. optisch klar ausgestaltet sein. Vorzugsweise ist der Kraftsensor zur vollständigen Einbringung in die Aussparung in ähnlicher Form ausgestaltet. Alternativ oder bei mehreren Kraftsensoren zusätzlich kann der Kraftsensor auch in rundlicher Form oder in anderer Form ausgestaltet sein. Bevorzugt ist der zumindest eine Kraftsensor teilweise in der Aussparung angeordnet.

Vorzugsweise ist der zumindest eine Kraftsensor als drucksensitiver Widerstandssensor oder als druckintensiver Piezosensor oder als Dehnungsmessstreifen ausgebildet. Piezosensoren oder piezoelektrische Sensoren arbeiten mit dem piezoelektrischen Effekt und zeichnen sich insbesondere durch eine lange Lebensdauer aus.

Dehnungsmessstreifen haben den Vorteil, dass sie schon bei geringer Verformung ihren elektrischen Widerstand ändern.

Sind mehrere Kraftsensoren vorhanden, so können auch verschiedene Sensorarten eingesetzt werden.

Die Aufgabe wird ferner gelöst durch ein Fahrzeug mit einer wie oben beschriebenen Bedieneinheit, wobei die Bedieneinheit mehrere Kraftsensoren zur Erfassung des Drucks, welcher auf das Bedienfeld der Bedieneinheit ausgeübt wird, aufweist, wobei die Bedieneinheit mit einer Auswerteeinheit verbunden ist und wobei die Auswerteeinheit zur Verarbeitung des gemessenen Drucks ausgestaltet ist. Vorzugsweise werden die Bedieneinheiten als Touchdisplays in Fahrzeugen eingesetzt. Abhängig von dem Ergebnis der Auswerteeinheit können anschließend verschiedene Aktionen ausgelöst werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
FIG 1: ein Fahrzeug mit einer erfindungsgemäßen Bedieneinheit,
FIG 2: ein restriktiver Touchscreen,
FIG 3: eine erste Ausgestaltung des Aufnahmegehäuses der Erfindung,
FIG 4: eine zweite Ausgestaltung des Aufnahmegehäuses der Erfindung,
FIG 5: eine detaillierte Ausgestaltung der Erfindung,
FIG 6: eine weitere detaillierte Ausgestaltung der Erfindung,
FIG 7: eine weitere detaillierte Ausgestaltung der Erfindung,
FIG 8: eine weitere detaillierte Ausgestaltung der Erfindung.

Obwohl die Erfindung im Detail durch die bevorzugten Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

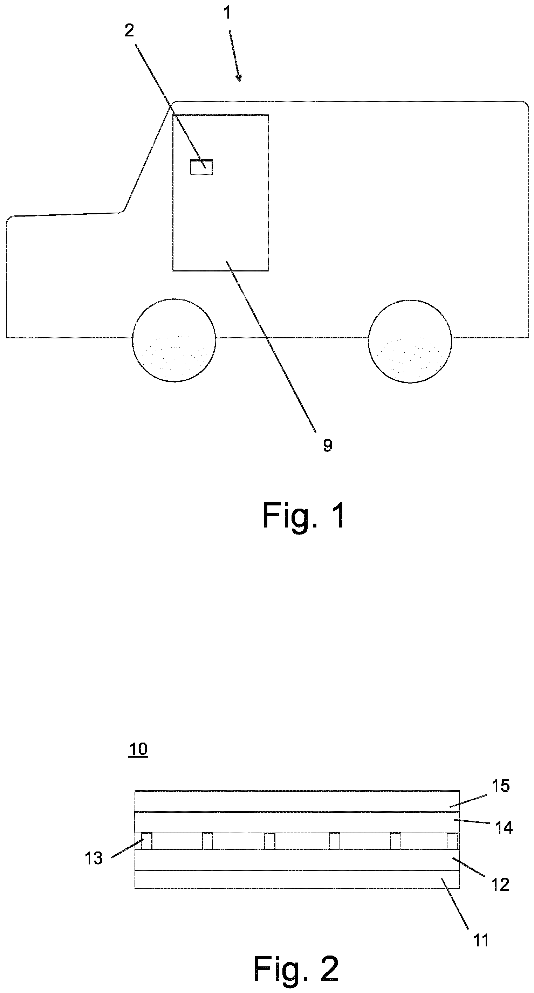

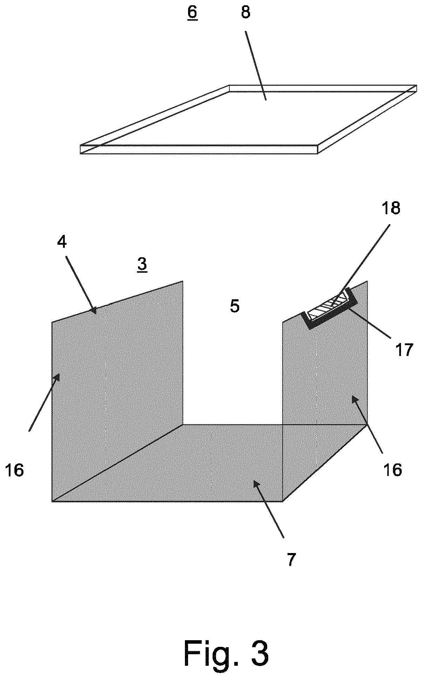

FIG 1 zeigt ein Fahrzeug 1 mit einer Bedieneinheit 2. Die Bedieneinheit 2 ist vorzugsweise im Cockpit des Fahrzeugs 1 installiert und Bestandteil eines Fahrerassistenzsystems 9. Die Bedieneinheit 2 weist ein Displaymodul auf, welches zur optischen Anzeige und Bedienung von veränderlichen Informationen ausgebildet ist. Die Bedieneinheit 2 weist ein Aufnahmegehäuse 3 (FIG 3) mit einer Displayseite 5 (FIG 3) mit einem Aufnahmerand 4 (FIG 3) auf. Das Displaymodul wird in dieses Aufnahmegehäuse 3 (FIG 3) eingebracht und zwar derart, dass eine Displaymodulseite mit der Displayseite 5 (FIG 3) übereinstimmt, so dass erzeugte Informationen vom Benutzer gesehen werden können. Ferner ist auf dem Displaymodul und dem Aufnahmerand 4 (FIG 3) eine Frontabdeckung 6 (FIG 3) angeordnet. Die Frontabdeckung 6 (FIG 3) weist ein transparentes berührungsempfindliches Bedienfeld 8 (FIG 3) auf. Die Frontabdeckung 6 (FIG 3) kann als berührungsempfindlicher Touchscreen 10 (FIG 2) ausgestaltet sein.

Ein solcher Touchscreen 10 ist beispielsweise in FIG 2 gezeigt. Der Touchscreen 10 ist beispielsweise als resistiver Touchscreen 10 ausgestaltet. Resistive Touchscreens 10 sind vielseitig einsetzbar und preiswert und können mit verschiedenen Medien bedient werden. Ein resistiver Touchscreen 10 umfasst eine Glasscheibe 11. Auf die Glasscheibe 11 wird eine transparente, leitende, erste ITO(Indiumzinnoxid)-Schicht 12 angeordnet.

Auf der ITO (Indiumzinnoxid)-Schicht 12 ist durch Abstandshalter 13 getrennt eine transparente, leitende, zweite ITO (Indiumzinnoxid)-Schicht 14 angeordnet. Die zweite ITO (Indiumzinnoxid) -Schicht 14 ist mit einer flexiblen, widerstandsfähigen hartbeschichteten Außenmembran 15 versehen.

FIG 3 zeigt eine erste Ausgestaltung des Aufnahmegehäuses 3. Diese weist eine Frontabdeckung 6 mit einem Bedienfeld 8 auf. Die Frontabdeckung 6 kann als Touchscreen 10 (FIG 2) ausgestaltet sein. Das Aufnahmegehäuse 3 weist eine Rückwand 7 und ein Paar von gegenüber angeordneten Seitenwänden 16 auf, wobei die Seitenwände 16 an der Rückwand 7 zur Aufnahme des Displaymoduls angeordnet sind. Das Aufnahmegehäuse 3 weist einen Aufnahmerand 4 auf, welcher zur Frontabdeckung 6 zeigt. Der Aufnahmerand 4 entspricht somit quasi dem Ende der Seitenwände 16.

Erfindungsgemäß weist der Aufnahmerand 4 Aussparungen 17 auf. In diesen Aussparungen 17 ist jeweils ein Kraftsensor 18 angeordnet.

Die Aussparungen 17 können bei der Herstellung des Aufnahmegehäuses 3 oder nachträglich eingebracht sein.

Vorzugsweise weist der Kraftsensor 18 eine längliche Form auf. In dieser länglichen Form kann er vollständig in der Aussparung 17 angeordnet sein. Somit müssen die Kraftsensoren 18 nicht mehr als transparente oder durchsichtige Sensoren ausgestaltet sein.

Durch die Integration in das Aufnahmegehäuse 3 kann zudem Bauraum eingespart werden. Zudem kann dadurch auf ein zusätzliches Gehäuse für den Kraftsensor 18 verzichtet werden. Dadurch können Zusatzkosten sowie zusätzlich benötigter Bauraum eingespart werden.

Die Aussparungen 17 können auf die Form des Kraftsensors 18, beispielsweise längere oder kürzere Kraftsensoren 18, angepasst werden.

Ferner können mehrere Aussparungen 17 zur Aufnahme mehrerer Kraftsensoren 18 vorhanden sein.

Der Kraftsensor 18 kann als kapazitiver Wegsensor ausgebildet sein. Ein kapazitiver Sensor arbeitet auf Basis der Veränderung der elektrischen Kapazität eines einzelnen Kondensators. Der kapazitive Sensor basiert darauf, dass zwei Elektroden, die Platten eines elektrischen Kondensators bilden. Durch den Druck wird eine Platte verformt, wodurch sich der Plattenabstand und damit die elektrisch messbare Kapazität ändern. Diese Kapazitätsänderung kann gemessen werden. Kapazitive Sensoren arbeiten extrem hochauflösend.

Der Kraftsensor 18 kann auch als drucksensitiver Widerstandssensor ausgebildet sein. Dieser ändert unter Einwirkung von Kraft bzw. Druck seinen elektrischen Widerstand. Ein drucksensitiver Widerstandssensor kann beispielsweise aus einem Sandwich mit zwei Kunststofffolien bestehen. Die eine ist auf der Innenseite mit einer graphithaltigen halbleitenden Paste beschichtet, die andere beispielsweise mit zwei kammförmig ineinander verschachtelten elektrisch leitenden Kontaktgittern. Die Kunststofffolien sind jedoch elektrisch voneinander isoliert. Unter Einwirkung von Druck oder Kraft auf das Sandwich werden die Kontaktgitter über die graphithaltige halbleitende Paste miteinander elektrisch verbunden, so dass der elektrische Widerstand gemessen werden kann. Auch andere Ausgestaltungen eines drucksensitiven Widerstandssensors sind möglich.

Der Kraftsensor 18 kann auch als Dehnungsmessstreifen ausgebildet sein. Dehnungsmessstreifen ändern schon bei geringen Verformungen ihren elektrischen Widerstand.

Sind mehrere Kraftsensoren 18 vorhanden, so können auch verschiedene Sensorarten eingesetzt werden.

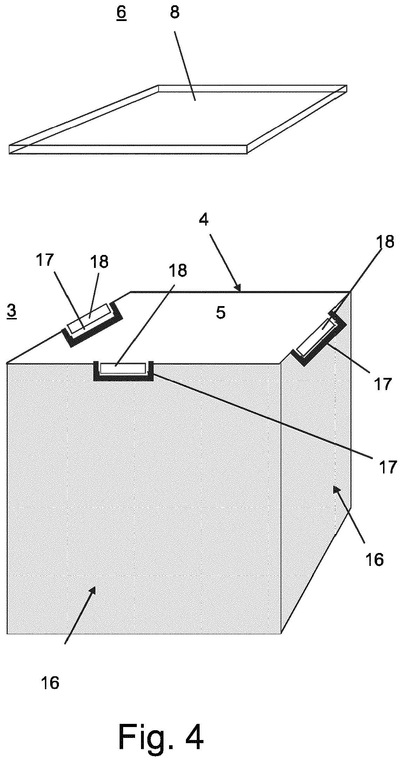

FIG 4 zeigt eine zweite Ausgestaltung des Aufnahmegehäuses. Hier umfasst das Aufnahmegehäuse 3 eine Rückwand 7 (FIG 3) und zwei Paare von gegenüber angeordneten Seitenwänden 16, wobei die Seitenwände 16 an der Rückwand 7 (FIG 3) zur Aufnahme des Displaymoduls angeordnet sind, so dass der Aufnahmerand 4 als umlaufender Aufnahmerahmen ausgebildet ist.

Vorzugsweise sind mindestens drei Kraftsensoren 18 über den Aufnahmerand 4 verteilt in Aussparungen 17 vorgesehen. Somit kann eine gute Signalauflösung erzielt werden. Werden mehr als drei Kraftsensoren 18 verwendet, so kann eine höhere Signalauflösung erzielt werden.

Die Kraftsensoren 18 sind vorzugsweise in länglicher Form ausgebildet und können vollständig in den jeweiligen Aussparungen 17 angeordnet werden. Alternativ oder zusätzlich können alle oder einige der Kraftsensoren 18 als runde Kraftsensoren 18 ausgebildet werden, welche nur teilweise in den Aussparungen 17 angeordnet werden.

Die Kraftsensoren 18 sind zur Auswertung mit einer Auswerteeinheit (nicht gezeigt) verbunden. Diese Verbindung kann beispielsweise mittels Kabel oder Leiterbahn bewerkstelligt werden. Somit kann der durch die Kraftsensoren 18 gemessene Druck und die Druckstelle auf der Frontabdeckung 6, beispielsweise dem Touchscreen 10 (FIG 2) mittels der Auswerteeinheit (nicht gezeigt) ausgewertet werden.

Abhängig von dem ausgeübten Druck und/oder der lokalisierten Druckstelle können anschließend verschiedene Aktionen ausgelöst werden.

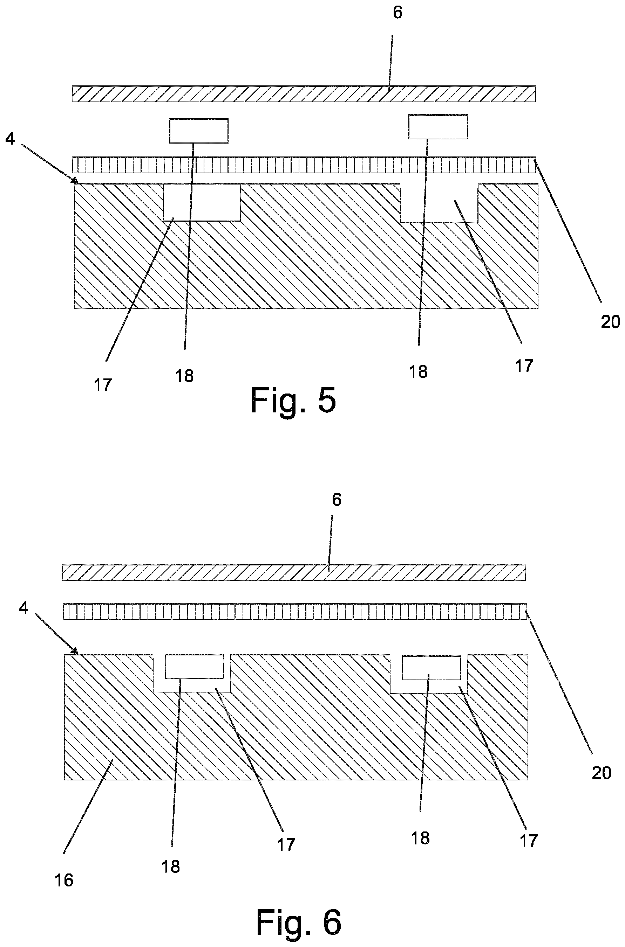

FIG 5 zeigt eine Ausgestaltung der gemäß dem ersten Aspekt der vorliegenden Erfindung. Hier ist eine Seitenwand 16 eines Aufnahmegehäuses 3 (FIG 4) zu sehen. Diese Seitenwand 16 weist am Aufnahmerand 4 eine Aussparung 17 auf. In dieser Aussparung 17 wird ein Kraftsensor 18 integriert.

Zwischen der Frontabdeckung 6 und dem Aufnahmerand 4 als auch zwischen dem Kraftsensor 18 und dem Aufnahmerand 4 ist zur Verbindung des Aufnahmegehäuses 3 (FIG 3) und des Kraftsensors 18 mit der Frontabdeckung 6 ein verformbarer adhäsiver Werkstoff 20 mit elastischer Eigenschaft angeordnet.

Somit kann bei Ausübung einer Kraft auf zumindest das Bedienfeld 8 (FIG 3) die Kraft durch Verformung des verformbaren adhäsiven Werkstoffs 20 auf den Kraftsensor 18 weitergeleitet werden. Bei Nachlassen der Kraftausübung auf das Bedienfeld 8 (FIG 3) wird die Verformung des verformbaren adhäsiven Werkstoffs 20 zurückgebildet, wodurch keine Kraft mehr auf den Kraftsensor 18 ausgeübt wird.

Der verformbare adhäsive Werkstoff 20 weist eine dauerhafte Verformbarkeit auf als auch eine elastische Eigenschaft, und dient der Verbindung zwischen Aufnahmegehäuse 3 (FIG 3) und Frontabdeckung 6. Durch den verformbaren adhäsiven Werkstoff 20 mit elastischer Eigenschaft kann die Bedienkraft des Benutzers auf den Kraftsensor 18 übertragen werden. Die elastische Eigenschaft des Werkstoffs 20 sorgt dafür, dass bei Wegfall des Druckes durch den Benutzer kein Druck mehr auf den Kraftsensor 18 übertragen wird.

Vorzugsweise ist der Werkstoff 20 als elastischer Klebstoff oder als elastisches Befestigungsklebeband ausgebildet.

Durch die Einbringung des Kraftsensors 18 in die Aussparungen 17 kann auf einen transparenten durchsichtigen Klebstoff verzichtet werden.

Alternativ oder ergänzend bei Vorhandensein mehrerer Kraftsensoren 18, ist der verformbare adhäsive Werkstoff 20 als adhäsive Formgedächtnislegierung ausgebildet. Dies sind spezielle Metalle, die in zwei unterschiedlichen Kristallstrukturen existieren können.

Auch andere elastische klebende Werkstoffe, wie speziell bearbeiteter Gummi etc. können verwendet werden.

Die Verformbarkeit des elastischen Werkstoffs 20 weist vorzugsweise eine geringere Steifigkeit als die der Frontabdeckung 6 auf. Dabei versteht man hier unter Steifigkeit den Widerstand eines Körpers gegen elastische Verformung durch die Druckkraft.

FIG 6 zeigt eine detaillierte Ausgestaltung gemäß dem zweiten Aspekt der vorliegenden Erfindung.

Hier ist zwischen der Frontabdeckung 6 und dem Aufnahmerand 4 als auch zwischen dem zumindest einem Kraftsensor 18 und der Frontabdeckung 6 zur Verbindung des Aufnahmegehäuses 3 und des Kraftsensors 18 mit der Frontabdeckung 6 ein verformbarer adhäsiver Werkstoff 20 mit elastischer Eigenschaft angeordnet.

Bei Ausübung einer Kraft auf zumindest das Bedienfeld 8 wird die Kraft durch Verformung des verformbaren adhäsiven elastischen Werkstoffs 20 auf den Kraftsensor 18 weitergeleitet. Bei Nachlassen der Kraftausübung auf das Bedienfeld 8 bildet der Werkstoff 20 seine Verformung zurück, wodurch keine Kraft auf den Kraftsensor 18 mehr ausgeübt wird.

Der elastische Werkstoff 20 kann auch hier ein Klebstoff, oder ein Klebeband, eine Formgedächtnislegierung oder ein anderer elastischer klebender Werkstoff 20 sein.

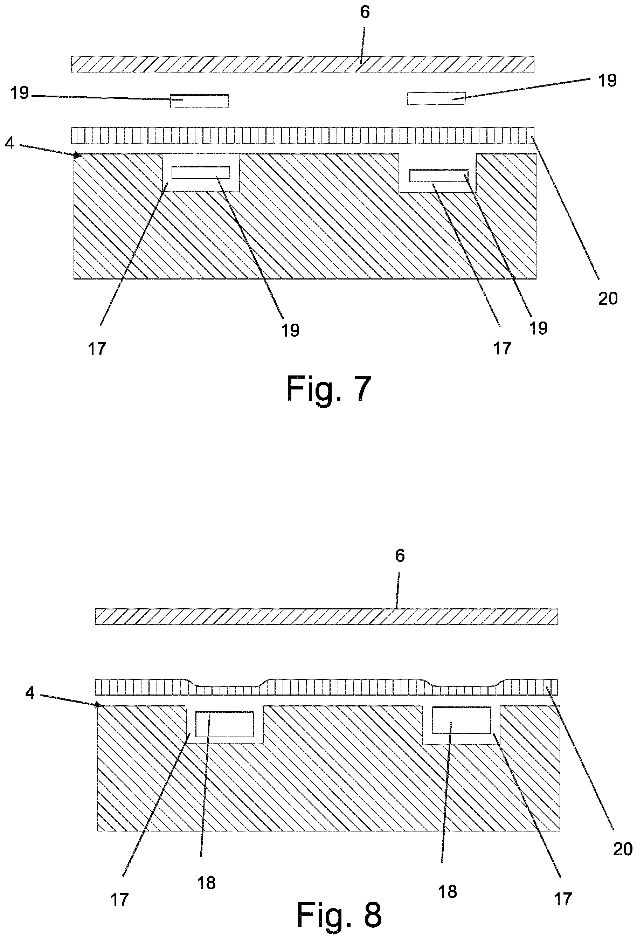

FIG 7 zeigt eine Ausgestaltung gemäß dem dritten Aspekt der vorliegenden Erfindung. Hierbei ist zwischen der Frontabdeckung 6 und dem Aufnahmerand 4 zur Verbindung des Aufnahmegehäuses 3 (FIG 3) mit der Frontabdeckung 6 ein verformbarer adhäsiver Werkstoff 20 mit elastischer Eigenschaft angeordnet. Der Kraftsensor ist als kapazitiver Drucksensor ausgebildet, wobei der kapazitive Drucksensor zwei Elektroden 19 umfasst. Der verformbare adhäsive Werkstoff 20 mit elastischer Eigenschaft ist zwischen den zwei Elektroden 19 angeordnet, so dass bei Ausübung einer Kraft auf zumindest das Bedienfeld 8 die Kraft durch Verformung des verformbaren adhäsiven Werkstoffs 20 auf den kapazitiven Drucksensor weitergeleitet wird. Bei Nachlassen der Kraftausübung auf das Bedienfeld 8 bildet der Werkstoff 20 seine Verformung zurück, wodurch keine Kraft auf den kapazitiven Drucksensor mehr ausgeübt wird.

Der elastische Werkstoff 20 dient hier als Dielektrikum zwischen den Elektroden 19. Das bedeutet, dass der elastische Werkstoff 20 als Teil des Kraftsensors verwendet wird.

Der elastische Werkstoff 20 ist hier beispielsweise als Klebstoff, Klebeschicht oder Klebeband ausgestaltet, wobei der elastische Werkstoff 20 elektrisch schwach- oder nichtleitend ist.

FIG 8 zeigt eine weitere Ausgestaltung der Erfindung. Der verformbare adhäsive Werkstoff 20 mit elastischer Eigenschaft ist hier als verformbare adhäsive Werkstoffschicht ausgebildet.

Im Bereich des Kraftsensors 18 ist die Werkstoffschicht dünner als in den Bereichen ohne Kraftsensor 18 ausgebildet. Dadurch kann die Auflösung des Kraftsensors 18 erhöht werden, wobei unter Auflösung im physikalischen Zusammenhang die Grenze der Fähigkeit des Kraftsensors 18 zu verstehen ist, Werte für einen ausgeübten Druck voneinander trennen zu können.

Mittels der Erfindung kann auf ein Bedienfeld 8 ausgeübter Druck erfasst werden und beispielsweise einer Funktion zugeordnet werden. Durch Verwendung mehrerer Kraftsensoren 18 kann der Schwerpunkt des Druckes genau ermittelt werden. Das Hinzufügen einer dritten Variablen, hier als z-Richtung bezeichnet, ermöglicht die Steuerung eines Bedienfeldes 8 nicht nur durch zweidimensionale Gesten, hier in x-, und y-Richtung, sondern auch durch Gesten in z-Richtung.

Durch die Anordnung in einer Aussparung 17 am Aufnahmegehäuse 3 kann auf zusätzlichen Bauraum verzichtet werden. Dadurch werden Zusatzkosten eingespart. Zusätzlich müssen keine durchsichtigen oder klaren Kraftsensoren 18 verwendet werden. Ferner kann auf ein zusätzliches Gehäuse für den/die Kraftsensoren 18 verzichtet werden.

## Patentansprüche

1. Bedieneinheit (2) für ein Fahrzeug (1) umfassend
ein Aufnahmegehäuse (3) zur Aufnahme eines Displaymoduls, wobei das Aufnahmegehäuse (3) einen Aufnahmerand (4) aufweist,
eine Frontabdeckung (6) mit zumindest einem transparenten berührungsempfindlichen Bedienfeld (8) zur Bedienung des Displaymoduls, mindestens einem der Frontabdeckung (6) zugeordneten Kraftsensor (18) zum Messen einer auf das Bedienfeld (8) der Frontabdeckung (6) ausgeübten Kraft, wobei der Aufnahmerand (4) Aussparungen (17) aufweist, wobei jeweils zumindest ein Kraftsensor (18) in den Aussparungen (17) angeordnet ist, wobei die Frontabdeckung (6) umfangsseitig zumindest teilweise mit dem Aufnahmerand (4) verbunden ist, wobei das Aufnahmegehäuse (3) eine Rückwand (7) und ein Paar von gegenüber angeordneten Seitenwänden (16) umfasst, und wobei die Seitenwände (16) an der Rückwand (7) zur Aufnahme des Displaymoduls angeordnet sind und der Aufnahmerand (4) das Ende der Seitenwände (16) ist,
**dadurch gekennzeichnet, dass**
zwischen der Frontabdeckung (6) und dem Aufnahmerand (4) als auch zwischen dem zumindest einem Kraftsensor (18) und dem Aufnahmerand (4) zur Verbindung des Aufnahmegehäuses (3) und des Kraftsensors (18) mit der Frontabdeckung (6) ein verformbarer adhäsiver Werkstoff (20) mit elastischer Eigenschaft angeordnet ist, so dass bei Ausübung einer Kraft auf zumindest das Bedienfeld (8) mittels des verformbaren adhäsiven Werkstoffes (20) die Kraft durch Verformung des verformbaren adhäsiven Werkstoffs (20) auf den Kraftsensor (18) weitergeleitet wird und bei Nachlassen der Kraftausübung auf das Bedienfeld (8) der verformbare adhäsive Werkstoff (20) seine Verformung zurückbildet, wodurch keine Kraft auf den Kraftsensor (18) mehr ausgeübt wird.

2. Bedieneinheit (2) für ein Fahrzeug (1) umfassend
ein Aufnahmegehäuse (3) zur Aufnahme eines Displaymoduls, wobei das Aufnahmegehäuse (3) einen Aufnahmerand (4) aufweist,
eine Frontabdeckung (6) mit zumindest einem transparenten berührungsempfindlichen Bedienfeld (8) zur Bedienung des Displaymoduls, mindestens einem der Frontabdeckung (6) zugeordneten Kraftsensor (18) zum Messen einer auf das Bedienfeld (8) der Frontabdeckung (6) ausgeübten Kraft, wobei der Aufnahmerand (4) Aussparungen (17) aufweist, wobei jeweils zumindest ein Kraftsensor (18) in den Aussparungen (17) angeordnet ist, wobei die Frontabdeckung (6) umfangsseitig zumindest teilweise mit dem Aufnahmerand (4) verbunden ist, wobei das Aufnahmegehäuse (3) eine Rückwand (7) und ein Paar von gegenüber angeordneten Seitenwänden (16) umfasst, und wobei die Seitenwände (16) an der Rückwand (7) zur Aufnahme des Displaymoduls angeordnet sind und der Aufnahmerand (4) das Ende der Seitenwände (16) ist,
**dadurch gekennzeichnet, dass**
zwischen der Frontabdeckung (6) und dem Aufnahmerand (4) als auch zwischen dem zumindest einem Kraftsensor (18) und der Frontabdeckung (6) zur Verbindung des Aufnahmegehäuses (3) und des Kraftsensors (18) mit der Frontabdeckung (6) ein verformbarer adhäsiver Werkstoff (20) mit elastischer Eigenschaft angeordnet ist, so dass bei Ausübung einer Kraft auf zumindest das Bedienfeld (8) mittels des verformbaren adhäsiven Werkstoffes (20) die Kraft durch Verformung des verformbaren adhäsiven Werkstoffs (20) auf den Kraftsensor (18) weitergeleitet wird und bei Nachlassen der Kraftausübung auf das Bedienfeld (8) der verformbare adhäsive Werkstoff (20) seine Verformung zurückbildet, wodurch keine Kraft auf den Kraftsensor (18) mehr ausgeübt wird.

3. Bedieneinheit (2) für ein Fahrzeug (1) umfassend
ein Aufnahmegehäuse (3) zur Aufnahme eines Displaymoduls, wobei das Aufnahmegehäuse (3) einen Aufnahmerand (4) aufweist,
eine Frontabdeckung (6) mit zumindest einem transparenten berührungsempfindlichen Bedienfeld (8) zur Bedienung des Displaymoduls, mindestens einem der Frontabdeckung (6) zugeordneten Kraftsensor (18) zum Messen einer auf das Bedienfeld (8) der Frontabdeckung (6) ausgeübten Kraft, wobei der Aufnahmerand (4) Aussparungen (17) aufweist, wobei jeweils zumindest ein Kraftsensor (18) in den Aussparungen (17) angeordnet ist, wobei die Frontabdeckung (6) umfangsseitig zumindest teilweise mit dem Aufnahmerand (4) verbunden ist, wobei das Aufnahmegehäuse (3) eine Rückwand (7) und ein Paar von gegenüber angeordneten Seitenwänden (16) umfasst, und wobei die Seitenwände (16) an der Rückwand (7) zur Aufnahme des Displaymoduls angeordnet sind und der Aufnahmerand (4) das Ende der Seitenwände (16) ist,
**dadurch gekennzeichnet, dass**
zwischen der Frontabdeckung (6) und dem Aufnahmerand (4) zur Verbindung des Aufnahmegehäuses (3) mit der Frontabdeckung (6) ein verformbarer adhäsiver Werkstoff (20) mit elastischer Eigenschaft angeordnet ist, wobei der Kraftsensor (18) als kapazitiver Drucksensor ausgebildet ist, wobei der kapazitive Drucksensor zwei Elektroden (19) umfasst und wobei der verformbare adhäsive Werkstoff (20) mit elastischer Eigenschaft zwischen den zwei Elektroden (19) angeordnet ist, so dass bei Ausübung einer Kraft auf zumindest das Bedienfeld (8) die Kraft durch Verformung des verformbaren adhäsiven Werkstoffs (20) auf den kapazitiven Drucksensor weitergeleitet wird und bei Nachlassen der Kraftausübung auf das Bedienfeld (8) der verformbare adhäsive Werkstoff (20) seine Verformung zurückbildet, wodurch keine Kraft auf den kapazitiven Drucksensor mehr ausgeübt wird.

4. Bedieneinheit (2) nach einem der Ansprüche 1, 2 oder 3, **dadurch gekennzeichnet, dass**
das Aufnahmegehäuse (3) eine Rückwand (7) und zwei Paare von gegenüber angeordneten Seitenwänden (16) umfasst, wobei die Seitenwände (16) an der Rückwand (7) zur Aufnahme des Displaymoduls angeordnet sind, so dass der Aufnahmerand (4) als umlaufender Aufnahmerahmen ausgebildet ist.

5. Bedieneinheit (2) nach einem der vorhergehenden Ansprüche 1 bis 4,
**dadurch gekennzeichnet, dass**
der verformbare adhäsive Werkstoff (20) als verformbare adhäsive Werkstoffschicht ausgebildet ist und die Werkstoffschicht im Bereich des Kraftsensors (18) dünner als in den Bereichen ohne Kraftsensor (18) ausgebildet ist.

6. Bedieneinheit (2) nach einem der vorhergehenden Ansprüche 1 bis 5, **dadurch gekennzeichnet, dass** der verformbare adhäsive Werkstoff (20) als ein verformbarer Klebstoff ausgebildet ist.

7. Bedieneinheit (2) nach einem der vorhergehenden Ansprüche 1 bis 6,
**dadurch gekennzeichnet, dass**
der verformbare adhäsive Werkstoff (20) als eine adhäsive Formgedächtnislegierung ausgebildet ist.

8. Bedieneinheit (2) nach einem der vorhergehenden Ansprüche 1 bis 7,
**dadurch gekennzeichnet, dass**
der verformbare adhäsive Werkstoff (20) eine geringere Steifigkeit als das Bedienfeld (8) aufweist.

9. Bedieneinheit (2) nach einem der vorhergehenden Ansprüche,
**dadurch gekennzeichnet, dass** die Frontabdeckung (6) als ein Touchscreen (10) ausgebildet ist.

10. Bedieneinheit (2) nach einem der vorhergehenden Ansprüche, **dadurch gekennzeichnet, dass**
der zumindest eine Kraftsensor (18) vollständig in der Aussparung (17) angeordnet ist.

11. Bedieneinheit (2) nach einem der vorhergehenden Ansprüche, **dadurch gekennzeichnet, dass**
der zumindest eine Kraftsensor (18) als drucksensitiver Widerstandssensor oder als druckintensiver Piezosensor oder als Dehnungsmessstreifen ausgebildet ist.

12. Fahrzeug (1) mit einer Bedieneinheit (2) nach einem der vorhergehenden Ansprüche, **dadurch gekennzeichnet, dass**
die Bedieneinheit (2) mehrere Kraftsensoren (18) zur Erfassung des Drucks, welcher auf das Bedienfeld (8) der Bedieneinheit (2) ausgeübt wird, aufweist, wobei die Bedieneinheit (2) mit einer Auswerteeinheit verbunden ist und wobei die Auswerteeinheit zur Verarbeitung des gemessenen Drucks ausgestaltet ist.

## Claims

1. Operator control unit (2) for a vehicle (1), comprising
a receiving housing (3) for receiving a display module, the receiving housing (3) having a receiving edge (4),
and comprising a front cover (6) having at least one transparent touch-sensitive operator control panel (8) for operating the display module, at least one force sensor (18), which is associated with the front cover (6), for measuring a force which is exerted on the operator control panel (8) of the front cover (6), the receiving edge (4) having recesses (17), at least one force sensor (18) being arranged in each of the recesses (17), the front cover (6) being at least partially connected to the receiving edge (4) at the periphery, the receiving housing (3) comprising a rear wall (7) and a pair of side walls (16) which are arranged opposite each other, and the side walls (16) being arranged on the rear wall (7) for receiving the display module and the receiving edge (4) being the end of the side walls (16),
**characterized in that**
a deformable adhesive material (20) with an elastic property is arranged between the front cover (6) and the receiving edge (4) as well as between the at least one force sensor (18) and the receiving edge (4) for connecting the receiving housing (3) and the force sensor (18) to the front cover (6), so that, when a force is exerted on at least the operator control panel (8) by means of the deformable adhesive material (20), the force is passed on to the force sensor (18) by deformation of the deformable adhesive material (20) and, when the exertion of force on the operator control panel (8) is removed, the deformable adhesive material (20) reverses its deformation, as a result of which force is no longer exerted on the force sensor (18).

2. Operator control unit (2) for a vehicle (1), comprising
a receiving housing (3) for receiving a display module, the receiving housing (3) having a receiving edge (4),
and comprising a front cover (6) having at least one transparent touch-sensitive operator control panel (8) for operating the display module, at least one force sensor (18), which is associated with the front cover (6), for measuring a force which is exerted on the operator control panel (8) of the front cover (6), the receiving edge (4) having recesses (17), at least one force sensor (18) being arranged in each of the recesses (17), the front cover (6) being at least partially connected to the receiving edge (4) at the periphery, the receiving housing (3) comprising a rear wall (7) and a pair of side walls (16) which are arranged opposite each other, and the side walls (16) being arranged on the rear wall (7) for receiving the display module and the receiving edge (4) being the end of the side walls (16),
**characterized in that**
a deformable adhesive material (20) with an elastic property is arranged between the front cover (6) and the receiving edge (4) as well as between the at least one force sensor (18) and the front cover (6) for connecting the receiving housing (3) and the force sensor (18) to the front cover (6), so that, when a force is exerted on at least the operator control panel (8) by means of the deformable adhesive material (20), the force is passed on to the force sensor (18) by deformation of the deformable adhesive material (20) and, when the exertion of force on the operator control panel (8) is removed, the deformable adhesive material (20) reverses its deformation, as a result of which force is no longer exerted on the force sensor (18).

3. Operator control unit (2) for a vehicle (1), comprising
a receiving housing (3) for receiving a display module, the receiving housing (3) having a receiving edge (4),
and comprising a front cover (6) having at least one transparent touch-sensitive operator control panel (8) for operating the display module, at least one force sensor (18), which is associated with the front cover (6), for measuring a force which is exerted on the operator control panel (8) of the front cover (6), the receiving edge (4) having recesses (17), at least one force sensor (18) being arranged in each of the recesses (17), the front cover (6) being at least partially connected to the receiving edge (4) at the periphery, the receiving housing (3) comprising a rear wall (7) and a pair of side walls (16) which are arranged opposite each other, and the side walls (16) being arranged on the rear wall (7) for receiving the display module and the receiving edge (4) being the end of the side walls (16),
**characterized in that**
a deformable adhesive material (20) with an elastic property is arranged between the front cover (6) and the receiving edge (4) for connecting the receiving housing (3) to the front cover (6), the force sensor (18) being designed as a capacitive pressure sensor, the capacitive pressure sensor comprising two electrodes (19) and the deformable adhesive material (20) with an elastic property being arranged between the two electrodes (19), so that, when a force is exerted on at least the operator control panel (8), the force is passed on to the capacitive pressure sensor by deformation of the deformable adhesive material (20) and, when the exertion of force on the operator control panel (8) is removed, the deformable adhesive material (20) reverses its deformation, as a result of which force is no longer exerted on the capacitive pressure sensor.

4. Operator control unit (2) according to any of Claims 1, 2 and 3,
**characterized in that**
the receiving housing (3) comprises a rear wall (7) and two pairs of side walls (16) which are arranged opposite each other, the side walls (16) being arranged on the rear wall (7) for receiving the display module, so that the receiving edge (4) is in the form of a peripheral receiving frame.

5. Operator control unit (2) according to any of the preceding Claims 1 to 4,
**characterized in that**
the deformable adhesive material (20) is in the form of a deformable adhesive material layer and the material layer is thinner in the region of the force sensor (18) than in the regions without the force sensor (18).

6. Operator control unit (2) according to any of the preceding Claims 1 to 5, **characterized in that** the deformable adhesive material (20) is in the form of a deformable adhesive.

7. Operator control unit (2) according to any of the preceding Claims 1 to 6,
**characterized in that**
the deformable adhesive material (20) is in the form of an adhesive shape-memory alloy.

8. Operator control unit (2) according to any of the preceding Claims 1 to 7,
**characterized in that**
the deformable adhesive material (20) has a lower rigidity than the operator control panel (8).

9. Operator control unit (2) according to any of the preceding claims, **characterized in that** the front cover (6) is in the form of a touchscreen (10).

10. Operator control unit (2) according to any of the preceding claims,
**characterized in that**
the at least one force sensor (18) is arranged entirely in the recess (17).

11. Operator control unit (2) according to any of the preceding claims,
**characterized in that**
the at least one force sensor (18) is in the form of a pressure-sensitive resistance sensor or in the form of a pressure-intensive piezo sensor or in the form of a strain gauge.

12. Vehicle (1) having an operator control unit (2) according to any of the preceding claims, **characterized in that**
the operator control unit (2) has a plurality of force sensors (18) for recording the pressure that is exerted on the operator control panel (8) of the operator control unit (2), the operator control unit (2) being connected to an evaluation unit, and the evaluation unit being designed to process the measured pressure.

## Revendications

1. Unité de commande (2) pour un véhicule (1), comprenant
un boîtier de réception (3) destiné à recevoir un module d'affichage, le boîtier de réception (3) présentant un bord de réception (4),
un couvercle frontal (6) avec au moins un panneau de commande (8) transparent et sensible au toucher, pour la commande du module d'affichage, au moins un capteur de force (18) associé au couvercle frontal (6) pour mesurer une force exercée sur le panneau de commande (8) du couvercle frontal (6), le bord de réception (4) présentant des évidements (17), au moins un capteur de force (18) étant respectivement agencé dans les évidements (17), le couvercle frontal (6) étant au moins partiellement relié au bord de réception (4) au niveau de la périphérie, le boîtier de réception (3) comprenant une paroi arrière (7) et une paire de parois latérales (16) agencées en vis-à-vis, et les parois latérales (16) étant agencées sur la paroi arrière (7) pour recevoir le module d'affichage, et le bord de réception (4) étant l'extrémité des parois latérales (16),
**caractérisée en ce que**
entre le couvercle frontal (6) et le bord de réception (4) ainsi qu'entre ledit au moins un capteur de force (18) et le bord de réception (4) pour relier le boîtier de réception (3) et le capteur de force (18) au couvercle frontal (6) est agencé un matériau adhésif déformable (20) ayant une propriété élastique, de sorte que, lorsqu'une force est exercée sur au moins le panneau de commande (8), la force est transmise au capteur de force (18) au moyen du matériau adhésif déformable (20), par déformation du matériau adhésif déformable (20) et, lorsque la force exercée sur le panneau de commande (8) diminue, le matériau adhésif déformable (20) reprend sa déformation, ce qui fait qu'aucune force n'est plus exercée sur le capteur de force (18).

2. Unité de commande (2) pour un véhicule (1), comprenant
un boîtier de réception (3) destiné à recevoir un module d'affichage, le boîtier de réception (3) présentant un bord de réception (4),
un couvercle frontal (6) avec au moins un panneau de commande (8) transparent et sensible au toucher, pour la commande du module d'affichage, au moins un capteur de force (18) associé au couvercle frontal (6) pour mesurer une force exercée sur le panneau de commande (8) du couvercle frontal (6), le bord de réception (4) présentant des évidements (17), au moins un capteur de force (18) étant respectivement agencé dans les évidements (17), le couvercle frontal (6) étant au moins partiellement relié au bord de réception (4) au niveau de la périphérie, le boîtier de réception (3) comprenant une paroi arrière (7) et une paire de parois latérales (16) agencées en vis-à-vis, et les parois latérales (16) étant agencées sur la paroi arrière (7) pour recevoir le module d'affichage, et le bord de réception (4) étant l'extrémité des parois latérales (16),
**caractérisée en ce que**
entre le couvercle frontal (6) et le bord de réception (4) ainsi qu'entre ledit au moins un capteur de force (18) et le couvercle frontal (6) pour relier le boîtier de réception (3) et le capteur de force (18) au couvercle frontal (6) est agencé un matériau adhésif déformable (20) ayant une propriété élastique, de sorte que, lorsqu'une force est exercée sur au moins le panneau de commande (8), la force est transmise au capteur de force (18) au moyen du matériau adhésif déformable (20), par déformation du matériau adhésif déformable (20) et, lorsque la force exercée sur le panneau de commande (8) diminue, le matériau adhésif déformable (20) reprend sa déformation, ce qui fait qu'aucune force n'est plus exercée sur le capteur de force (18).

3. Unité de commande (2) pour un véhicule (1), comprenant
un boîtier de réception (3) destiné à recevoir un module d'affichage, le boîtier de réception (3) présentant un bord de réception (4),
un couvercle frontal (6) avec au moins un panneau de commande (8) transparent et sensible au toucher, pour la commande du module d'affichage, au moins un capteur de force (18) associé au couvercle frontal (6) pour mesurer une force exercée sur le panneau de commande (8) du couvercle frontal (6), le bord de réception (4) présentant des évidements (17), au moins un capteur de force (18) étant respectivement agencé dans les évidements (17), le couvercle frontal (6) étant au moins partiellement relié au bord de réception (4) au niveau de la périphérie, le boîtier de réception (3) comprenant une paroi arrière (7) et une paire de parois latérales (16) agencées en vis-à-vis, et les parois latérales (16) étant agencées sur la paroi arrière (7) pour recevoir le module d'affichage, et le bord de réception (4) étant l'extrémité des parois latérales (16),
**caractérisée en ce que**
un matériau adhésif déformable (20) ayant une propriété élastique est agencé entre le couvercle frontal (6) et le bord de réception (4) pour relier le boîtier de réception (3) au couvercle frontal (6), le capteur de force (18) étant conçu sous la forme d'un capteur de pression capacitif, le capteur de pression capacitif comprenant deux électrodes (19) et le matériau adhésif déformable (20) ayant une propriété élastique étant agencé entre les deux électrodes (19), de sorte que, lorsqu'une force est exercée sur au moins le panneau de commande (8), la force est transmise au capteur de pression capacitif par déformation du matériau adhésif déformable (20) et, lorsque la force exercée sur le panneau de commande (8) diminue, le matériau adhésif déformable (20) reprend sa déformation, ce qui fait qu'aucune force n'est plus exercée sur le capteur de pression capacitif.

4. Unité de commande (2) selon l'une des revendications 1, 2 ou 3,
**caractérisée en ce que**
le boîtier de réception (3) comprend une paroi arrière (7) et deux paires de parois latérales (16) agencées en vis-à-vis, les parois latérales (16) étant agencées sur la paroi arrière (7) pour recevoir le module d'affichage, de sorte que le bord de réception (4) est conçu sous la forme d'un cadre de réception périphérique.

5. Unité de commande (2) selon l'une des revendications précédentes 1 à 4,
**caractérisée en ce que**
le matériau adhésif déformable (20) est conçu sous la forme d'une couche de matériau adhésif déformable et la couche de matériau est plus mince dans la zone du capteur de force (18) que dans les zones sans capteur de force (18).

6. Unité de commande (2) selon l'une des revendications précédentes 1 à 5, **caractérisée en ce que** le matériau adhésif déformable (20) est réalisé sous la forme d'un adhésif déformable.

7. Unité de commande (2) selon l'une des revendications précédentes 1 à 6,
**caractérisée en ce que**
le matériau adhésif déformable (20) est réalisé sous la forme d'un alliage adhésif à mémoire de forme.

8. Unité de commande (2) selon l'une des revendications précédentes 1 à 7,
**caractérisée en ce que**
le matériau adhésif déformable (20) présente une rigidité inférieure à celle du panneau de commande (8).

9. Unité de commande (2) selon l'une des revendications précédentes,
**caractérisée en ce que** le couvercle frontal (6) est conçu sous la forme d'un écran tactile (10).

10. Unité de commande (2) selon l'une des revendications précédentes,
**caractérisée en ce que**
ledit au moins un capteur de force (18) est entièrement agencé dans l'évidement (17).

11. Unité de commande (2) selon l'une des revendications précédentes,
**caractérisée en ce que**
ledit au moins un capteur de force (18) est conçu sous la forme d'un capteur de résistance sensible à la pression ou comme un capteur piézoélectrique à forte pression ou comme une jauge de contrainte.

12. Véhicule (1) avec une unité de commande (2) selon l'une des revendications précédentes, **caractérisé en ce que**
l'unité de commande (2) présente plusieurs capteurs de force (18) pour détecter la pression qui est exercée sur le panneau de commande (8) de l'unité de commande (2), l'unité de commande (2) étant reliée à une unité d'évaluation et l'unité d'évaluation étant conçue pour traiter la pression mesurée.
